Europäisches Patentamt

European Patent Office

Office européen des brevets

(19)

(11) Publication number: **0 132 874**
**B1**

# (12) EUROPEAN PATENT SPECIFICATION

(45) Date of publication of patent specification: **04.05.88**

(51) Int. Cl.⁴: **G 02 B 6/12,** G 02 B 3/00

(21) Application number: **84200997.9**

(22) Date of filing: **10.07.84**

(54) Geodesic optical component.

(30) Priority: **11.07.83 NL 8302461**

(43) Date of publication of application:
**13.02.85 Bulletin 85/07**

(45) Publication of the grant of the patent:
**04.05.88 Bulletin 88/18**

(84) Designated Contracting States:
**DE FR GB IT SE**

(56) References cited:
**EP-A-0 006 052**
**EP-A-0 021 993**
**EP-A-0 050 545**
**GB-A-2 027 931**

**ARCHIV FÜR ELEKTRONIK UND
ÜBERTRAGUNGSTECHNIK, vol. 34, no. 10,
October 1980, pages 385-393; WU LU CHANG
et al.: "Geodesic components for guided wave
optics"**

(73) Proprietor: **N.V. Philips' Gloeilampenfabrieken
Groenewoudseweg 1
NL-5621 BA Eindhoven (NL)**

(72) Inventor: **Nicia, Antonius Josephus Adrianus
c/o INT. OCTROOIBUREAU B.V. Prof. Holstlaan 6
NL-5656 AA Eindhoven (NL)**

(74) Representative: **Cobben, Louis Marie Hubert
et al
INTERNATIONAAL OCTROOIBUREAU B.V. Prof.
Holstlaan 6
NL-5656 AA Eindhoven (NL)**

Courier Press, Leamington Spa, England.

## Description

The invention relates to a geodesic optical component for realizing a predetermined optical function comprising:
a substrate having a flat portion and a curved surface portion bounded by the flat surface portion, and
an optical waveguide layer on the surface of the substrate, said waveguide layer having a substantially uniform thickness and following the slope of the substrate and having an index of refraction higher than that of the substrate.

A component of this type can be used in optical telecommunication systems using guided wave optical fibres, for example in a repeater station between two parts of an optical fibre link or in the transmitting or receiving stations at the beginning or end of an optical fibre cable. The component in question can form part of an optical system integrated on a single substrate, consisting of a light source and a light-sensitive detector between which one or more optical components with special optical functions are inserted. There are various optical functions that can be fulfilled by geodesic optical elements, such as beam deflection, beam splitting, reflection and imaging.

In the article "Geodesic Components for Guided Wave Optics" published in "Archiv für Elektronik und Übertragungstechnik" (AEU) 34 No. 10, October 1980, pages 385—393, the geometry and operation of different geodesic components are described. The designs of the optical components described therein involve the application of relatively large height differences in the substrate, of the order of a few millimetres. Using pressing techniques or etching it is very difficult to produce such considerable height differences with the required accuracy. In order to be able to make integrated optical components or circuits in large numbers at a reasonable price, however, a technique of this type is nevertheless desirable.

The purpose of the invention described here is to provide a design for geodesic optical component such that this component can be made with the required accuracy by means of the inexpensive etching or pressing techniques. The geodesic optical component in accordance with the invention is characterized in that the profile of said curved surface portion is constituted by a number of alternating first and second sub-portions having opposed slopes, said sub-portions being obtained by dividing a monotonic curve, which determines the optical behaviour of the geodesic component, into first and second curve portions, by mirror-inverting the second curve portions with respect to a plane parallel to the plane of the flat surface portion and by shifting the curve portions towards the plane of the flat surface portion, thereby considerably reducing the depth or height of the curved surface portion.

The invention is based on the insight that, since a depression in the substrate surface has the same effect optically as a protrusion above that surface, this fact can be used for considerably reducing the maximum depth or height of a corrugation or profile determining an optical function.

It is to be noted that the profile of the geodesic component according to the present invention is not a grating profile. In the latter the shape of the profile itself determines the optical behaviour of the grating, whereas in the geodesic optical component it is not the alternation of first and second profile portions that determines the optical behaviour, but the shape of the ground curve from which these profile portions arise.

A preferred embodiment of a geodesic optical component in accordance with the invention is further characterized in that the transitions between the first and second sub-portions are rounded, the curve from which the profile is obtained having, at the positions of said transitions, parts that are parallel to the flat surface portion.

It should be noted that it is stated in the cited article "AEU" 34, No. 10, October 1980, pages 385—393, that the transition from the depressed part to the flat part of the substrate must be gradual. In the component described in that article, however, the profile curve is monotonic in shape and only one transition needs to have a flowing curvature. Moreover, this profile curve was not produced from a curve with flat parts.

The invention will now be elucidated on the basis of the drawing, in which:
Figure 1 shows a known geodesic optical component in perspective,
Figure 2 shows a profile curve of this component,
Figure 3 shows a profile curve of a geodesic optical component in accordance with the invention
Figure 4 shows a profile curve with flat parts,
Figure 5 shows a geodesic optical component with rounded transitions, derived from the profile curve in Figure 4, and
Figure 6 shows a method of fabricating a profiled substrate for a geodesic optical component.

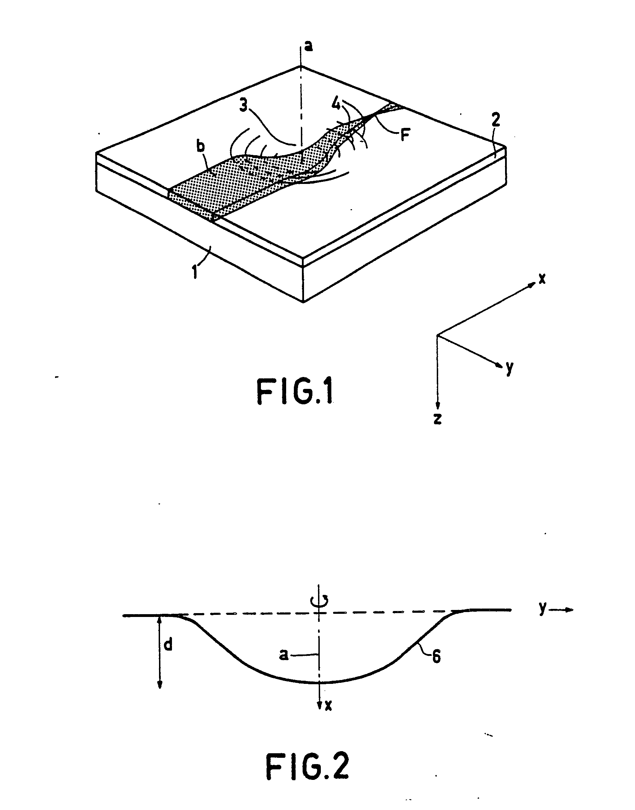

The geodesic lens illustrated in figure 1 consists of a substrate 1 made for example of glass, of a transparent plastic of a semiconducting material or of a crystal such as lithium niobate. The substrate 1 exhibits an unevenness, in this example a rotationally symmetric depression 3, indicated by a number of concentric circles 4. Figure 2 shows the profile curve 6 of this unevenness in a plane that contains the axis of rotation a. Applied to the substrate 1 is a thin light-guiding layer 2, whose thickness for multimode light-guiding is between about 30 μm and 75 μm and for monomode light-guiding is about 1 μm.

This layer 2 consists of a transparent material whose refractive index is higher than that of the substrate 1. The light-guiding layer 2 has uniform thickness and therefore follows the shape of the substrate 1. Since the refractive index in the layer 2 is greater than outside it, most of the radiant energy of a beam b entering from the left will remain trapped inside the light-conducting layer 2. Since at the location of the depression in the substrate the shape of the layer 2 changes, the direction of the peripheral rays of the beam b changes also. The beam b is then no longer parallel but for a predetermined profile curve 6 convergent and is focused at the point F.

The power of the goedesic lens is determined by the depth d of the depression. If d has a small value the lens is weak, whereas with a larger value of d the lens focuses more strongly. In order to obtain the lens power required in practical cases, the depth d could well have to be a few millimetres. The manufacture of geodesic optical elements or, more generally, geodesic optical circuits in large numbers at an acceptable price makes it desirable to produce the profile in the substrate by means of pressing or etching techniques. If these profiles are relatively deep it is very difficult to produce the profiles with the desired accuracy, of the order of 3 μm, by pressing or etching.

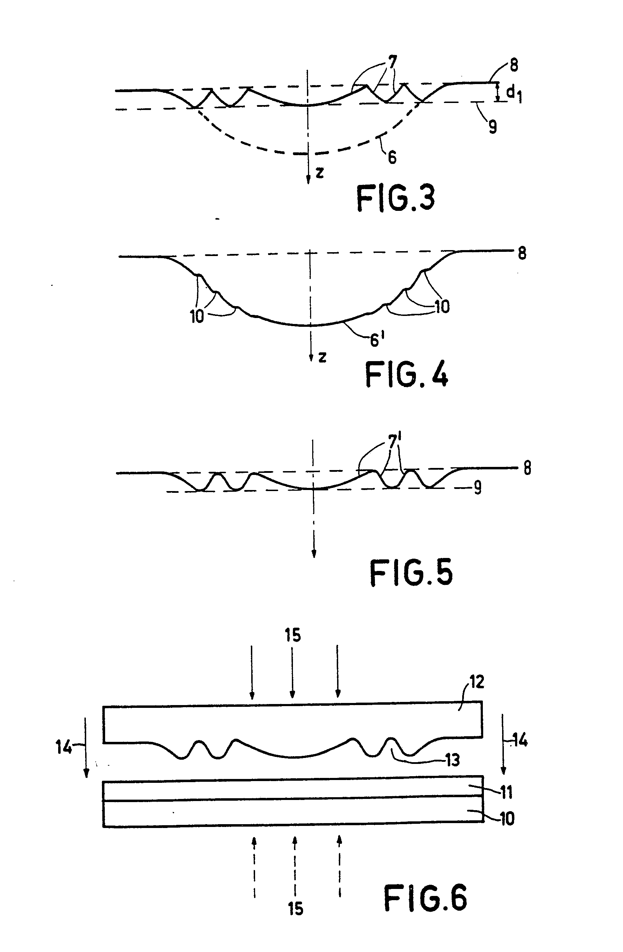

According to the invention the relatively deep profile of a geodesic optical component, which is required to fulfil a specific optical function, is replaced by a profile that is relatively shallow, so that the inexpensive etching or pressing techniques can be used. The curve of the profile now proposed is no longer monotonic but is wavelike in form, that is to say the profile curve is composed of a number of part curves which have alternately positive and negative slopes. Figure 3 shows such a profile curve 7 of a geodesic lens that has the same effect as the lens in figure 1. For comparison the profile curve of the latter lens is indicated by a dashed curve 6 in figure 3.

The curve 7 is produced by first following from a substrate surface 8 the original curve 6 until a particular depth $d_1$ is reached. The next piece of the curve 6 is mirrored with respect to the line 9, the length of this piece being preferably chosen such that the mirrored part of this piece reaches original plane of the substrate surface. In the design of the profile indicated by curve 7, use is made of the fact that, in optical terms, a depression has the same effect as a protrusion. Evidently, an observer situated above the substrate in figure 1 will observe a depression, whereas when situated under the substrate he will observe a protrusion or a hill.

The profile curve given in figure 3 shows sharp transitions between the positive and the negative slopes, which transitions can cause light-scattering. To avoid such scattering the transitions are rounded off, and the transition from the sunken to the flat part of the substrate is also rounded as shown in figure 2. Since these roundings-off are incidental in the sense that they are not connected with the lens function, the areas of rounding must be as small as possible in order to ensure that they do not unduly influence the operation of the lens. In accordance with the invention it is possible to realise roundings spread over a larger area, which roundings are better from the point of view of scatter-suppression, by taking the roundings into account in the design of the lens. For a given function to be realised a monotonic profile curve is calculated in which horizontal parts occur that flow smoothly into the other parts of this curve. Figure 4 shows such a profile curve 6' with horizontal parts 10. This profile curve 6' is converted into a zigzag curve 7' in the same manner as curve 6 in figure 2 is converted into the curve 7 in figure 3. Curve 7' shown in figure 5 has substantial rounded areas but the lens operation is nevertheless the same as that of the curve in figure 2.

The geodesic optical components of the invention can be made by the known method of first producing the required profile in a substrate and then applying the light-guiding layer by vapour deposition or diffusion. The profiled substrates can be made either by the known etching or pressing techniques or by means of a so-called replica process, because the profiles are so shallow. In that process a matrix is pressed into a softened material. A process of this type is illustrated in figure 6.

A plate 10 is coated with a sufficiently thick layer 11 of a sufficiently softened plastic, which is then cured (hardened) by heat, by ultraviolet radiation or by cooling. Photopolymerisable lacquers cured by ultraviolet light are particularly suitable for this purpose. In a matrix 12 a structure 13 is applied which is the converse of the profile to be produced, for example the lens profile in figure 3 of figure 5. This matrix 12 is then, as shown by the arrows 14, pressed into the plastic layer 11. The plastic 11 is then left to harden, for example by irradiating it with ultraviolet light 15 through the plate 10 of through the matrix 12, after which the matrix is removed.

The invention has been elucidated on the basis of a geodesic lens. It will be evident that the invention can be applied in other geodesic components, for example beam-splitters beam-deflectors and reflectors, as described in the cited article in "AEU" *34* No. 10, October 1980, pages 385—393.

**Claims**

1. Geodesic optical component for realizing a predetermined optical function comprising:

a substrate having a flat portion (8) and a curved surface portion (7; 7') bounded by the flat surface portion, and

an optical waveguide layer on the surface of the substrate, said waveguide layer having a substantially uniform thickness and following the slope of the substrate and having an index of refraction higher than that of the substrate,

characterized in that the profile of said curved surface portion (7; 7') is constituted by a number of alternating first and second sub-portions having opposed slopes, said sub-portions being obtained by dividing a monotonic curve (6; 6') which determines the optical behaviour of the geodesic component, into first and second curve portions, by mirror-inverting the second curve portions with respect to a plane (9) parallel to the plane of the flat surface portion and by shifting the curve portions towards the plane of the flat surface portion, thereby considerably reducing the depth or height of the curved surface portion.

2. Geodesic optical component as claimed in claim 1, characterized in that the transitions between the first and second sub-portions are rounded, the curve (6') from which the profile (7') is obtained having, at the positions of said transitions, parts (10) that are parallel to the flat surface portion (8).

## Patentansprüche

1. Geodätische optische Komponent zur Verwirklichung einer vorgegebenen optischen Funktion mit:

einem Substrat mit einer Fläche (8) und einer Mulde (7, 7'), die von der Ebene begrenzt wird, und mit

einer optischen Wellenleiterschicht auf der Oberfläche des Substrats, wobei die Wellenleiterschicht eine im wesentlichen einheitliche Dicke hat, der Neigung des Substrats folgt und einen Brechungsindex höher als der des Substrats hat,

dadurch gekennzeichnet, daß durch eine Anzahl abwechselnd erster und zweiter Unterabschnitte mit entgegengesetzt abfallenden Flanken das Profil der Mulde (7, 7') gebildet wird, und diese Unterabschnitte durch Teilung einer das optische Verhalten der geodätischen Komponente bestimmenden monotonen Kurve (6, 6') in erste und zweite Kurvenabschnitte, durch Spiegelumkehrung der zweiten Kurvenabschnitte in bezug auf eine Ebene (9) parallel zur Flächenebene und durch Verschiebung der Kurvenabschnitte in Richtung auf die Flächenebene erhalten werden, wobei die Tiefe oder Höher der Mulde erheblich reduziert wird.

2. Geodätische optische Komponente nach Anspruch 1, dadurch gekennzeichnet, daß die Übergänge zwischen den ersten und zweiten Unterabschnitten gerundet sind, daß die Kurve (6'), von der das Profil (7') abgeleitet wird, an den Stellen dieser Übergänge parallel zur Fläche (8) verlaufende Abschnitte aufweist.

## Revendications

1. Composant optique géodésique pour la réalisation de fonction optique pré-déterminée comprenant:

un substrat présentant une partie plane (8) et une partie de surface (7, 7') courbée délimitée par la partie de surface plane et,

une couche de guidage optique appliquée sur la surface du substrat, ladite couche de guidage optique présentant une épaisseur pratiquement uniforme et suivant la pente du substrat et présentant un indice de réfraction supérieur à celui du substrat, caractérisé en ce que le profil de ladite partie de surface (7, 7') courbée est constitué par plusieurs premières et secondes sous-parties alternées présentant des pentes opposées, lesdites sous-parties étant obtenues par division d'une courbe monotone (6, 6'), qui détermine le comportement optique du composant géodésique, en des premières et secondes parties de courbe, par inversion spéculaire des secondes parties de courbe par rapport à un plan (9) parallèle au plan de la partie de surface plane et par décalage des parties de courbe vers le plan de la partie de surface plane, réduisant ainsi notablement la profondeur ou la hauteur de la partie de surface courbée.

2. Composant optique géodésique selon la revendication 1, caractérisé en ce que les transitions entre les premières et secondes sous-parties sont arrondies, la courbe (6') à partir de laquelle s'obtient le profil présentant, aux endroits desdites transitions, des parties qui sont parallèles à la partie de surface plane (8).

FIG.1

FIG.2

FIG.3

FIG.4

FIG.5

FIG.6